# EUROPÄISCHE PATENTANMELDUNG

(11) **EP 1 788 055 A1**
(43) Veröffentlichungstag der Anmeldung: **23.05.2007**
(21) Anmeldenummer: 06023315.2
(22) Anmeldetag: 09.11.2006
(51) Int. Cl.: C09J 123/10, C09J 123/14, C08L 23/10, C08L 23/14

(54) **Verwendung von Polyelefinwachsen in Heissschmelzmassen**

(30) Priorität: 18.11.2005 DE 102005055020
(71) Anmelder: Clariant Produkte (Deutschland) GmbH, 65929 Frankfurt am Main (DE)
(72) Erfinder: Bach, Sebastijan, Dr., 86462 Langweid (DE); Herrmann, Hans-Friedrich, Dr., 64521 Gross-Gerau (DE); Hohner, Gerd, Dr., 86368 Gersthofen (DE)
(74) Vertreter: Paczkowski, Marcus

(57) **Zusammenfassung**

Heißschmelzmassen basieren auf isotaktischen, niedrig-molekularen, niedrig-viskosen Homo- oder Copolymerwachsen, ataktischen Poly-alfa-Olefinen (APAOs) und einem Harzanteil unter 20 Gew.-%. Heißschmelzmassen dieser Art lassen sich hervorragend als Schmelzkleber verwenden.

## Beschreibung

Die Erfindung betrifft Heißschmelzmassen, basierend auf isotaktischen, niedrig-molekularen, niedrig-viskosen Homo- oder Copolymerwachsen und ataktischen Poly-alfa-Olefinen (APAOs) und einem Harzanteil unter 20 Gew.-%.

Heißschmelzmassen (hot melts) sind thermoplastische, bei Umgebungstemperatur feste Werkstoffe, die im schmelzflüssigen Zustand schichtförmig auf geeignete Substratoberflächen appliziert werden und dort nach dem Erstarren unterschiedliche Funktionen ausüben. Sie sind vorzugsweise auf Basis von Harzen, Wachsen, thermoplastischen Kunststoffen und Elastomeren aufgebaut und enthalten gegebenenfalls Zusätze von Füllstoffen, Pigmenten und Additiven wie Stabilisatoren etc.

Beispielsweise können Heißschmelzmassen als lösemittelfreie Klebstoffe zum Verkleben eingesetzt werden. Derartige Schmelzhaftklebstoffe werden aufgrund ihrer vielseitigen Vorteile in zunehmendem Umfang u. a. zur Herstellung von Hygiene- und Pflegeartikel, in der Papier-, Verpackungs-, Möbel-, Textil- Schuh- und Bauindustrie als wirtschaftliche und umweltfreundliche Alternative zu herkömmlichen, lösemittelbasierenden Klebstoffen eingesetzt.

Heißschmelzmassen werden weiter im Straßenbau als thermoplastische Bindemittel zur Herstellung verkehrsleitender Sichtzeichen verwendet, wie z.B. "Zebrastreifen" an Fußgängerübergängen, Mittel- oder Begrenzungslinien oder anderen signalisierenden Hinweisen zur Steuerung des Verkehrsflusses. Die dafür eingesetzten Bindemittel können neben Wachsen thermoplastische Kunststoffe, Harze sowie Weichmacher enthalten. Zur Anwendung für die Straßenmarkierung werden diese Bindemittel in der Regel mit Füllstoffen wie Sand oder Kalk, Pigmenten wie Titandioxid und lichtreflektierenden Zusätzen, z.B. Glasperlen abgemischt.

Bestandteile üblicher Schmelzkleber-Rezepturen sind polare und unpolare Polymere, Harze, sowie Wachse.

Die Klebkraft, die sich aus der nach dem Erstarren verbleibenden Haftklebrigkeit eines Schmelzhaftklebstoffes ableitet hängt einerseits von der Wechselwirkung des Klebstoffes mit dem zu beklebenden Substrat ab, d.h. von der Adhäsion zwischen Schmelzhaftklebstoff und Substrat. Darüber hinaus beruht die Klebkraft aber auch auf der Kohäsion (innere Festigkeit) des Schmelzhaftklebstoffes selbst.

Die polaren und unpolaren Polymere des Schmelzhaftklebstoffes dienen als Gerüstsubstanz. Sie sorgen für den kohäsiven Zusammenhalt der Klebemasse und tragen gleichzeitig zur Adhäsion zum Substrat bei. Der Harzzusatz verbessert die Adhäsionswirkung und kann die Kompatibilität der verschiedenen Kleberkomponenten begünstigen. Wachse werden zur Modifizierung in Anteilen, bezogen auf die Schmelzklebermassen von in der Regel weniger als 10 Gew.-% eingesetzt. Sie regulieren wichtige physikalische Eigenschaften der Klebemassen wie etwa Härte, Schmelzviskosität und Erweichungspunkt und beeinflussen in ihrer Wirkung auf offene Zeit, Adhäsion, Kohäsion etc. entscheidend das anwendungstechnische Verhalten. Bei Wachseinsatzmengen von mehr als 10 Gew.-% wurde aber bisher in aller Regel eine Verschlechterung der Eigenschaften, insbesondere eine Verminderung der Klebkraft des Heißschmelzklebers gefunden.

In EP 0 890 584 wird die Herstellung von Homo-Propylenwachsen und Propylen-Copolymerwachsen mit Hilfe von Metallocenkatalysatoren und deren Verwendung unter anderem in Heißschmelzmassen beschrieben. Die Heißschmelzmassen enthalten im Wesentlichen drei Komponenten: ein Polymer, ein Harz (tackifier) und ein Wachs.

In WO 2004/104 128 werden Heißschmelzmassen beschrieben enthaltend als Polyolefinwachse Copolymerwachse aus Propylen, 0,1 bis 30 Gew.-% Ethylen und 0,1 bis 50 Gew.-% eines verzweigten oder unverzweigten 1 Alkens mit 4 bis 20 C-Atomen.

In US 5,397,843 werden Heißschmelzmassen beschrieben, enthaltend hochmolekulare Ethylen-alfa-Olefin-Copolymere und niedermolekulare ataktische Poly-alfa-Olefine (APAOs).

In US 2004/0 115 456 und US 2004/0 081 795 werden Heißschmelzmassen beschrieben, enthaltend 4 bis 50 Gew.-% isotaktische Propylen-Copolymere und 20 bis 65 Gew.-% einer Harzkomponente (tackifier), beispielsweise Kohlenwasserstoffharze, natürliche und modifizierte Harze, Harzester und synthetische Polyterpene, sowie optional ataktische Poly-alfa-Olefine (APAOs), Plastifiziermittel, Wachs, Stabilisatoren, Füllmaterial und optional ein sekundäres Polymer, beispielsweise Poly(meth)acrylate etc. Die in den beiden Schriften augeführten Beispiele an Heißschmelzmassen, enthalten isotaktische Propylencopolymere mit 1,5 bis 20 Gew.-% Ethylen oder höhere α-Olefine, wobei die Copolymere mittlere Molmassen M_{w} zwischen ca. 170 000 und 240 000 g/mol und zahlenmittlere Molmassen Mₙ zwischen ca. 60 000 und 80 000 g/mol aufweisen.

Solche hochmolekularen Olefin-Polymere sind kunststoffartig, hochviskos bis fest und zeigen keine oder bloß geringe Adhäsion. Die in US 2004/0 115 456 und US 2004/0 081 795 beanspruchten Heißschmelzmassen enthalten deshalb neben isotaktischen Propylencopolymeren 20 bis 65 Gew.-% eines Harzes. Der Einsatz solch großer Mengen an Harzen ist teuer, er kann leicht zu Korrosion, Geruchsbildung und einer Beeinträchtigung der Recyclingprozesse der mit solchen Heißschmelzmassen ausgerüsteten Produkte führen.

Aufgabe der vorliegenden Erfindung war es, Heißschmelzmassen bereitzustellen, die den sehr unterschiedlichen anwendungstechnischen Anforderungen an Heißschmelzmassen in Bezug auf Adhäsion, Kohäsion, Schmelzviskosität, Kälte- und Wärmestabilität, Flexibilität, Zug- und Dehnbelastung etc. genügen und die gleichzeitig möglichst geringe Anteile an Harz enthalten.

Völlig überraschend wurde gefunden, dass diese Aufgabe gelöst wird durch eine Kombination von isotaktischen, niedrig-molekularen, niedrig-viskosen Homo- oder Copolymerwachsen mit ataktischen Poly-alfa-Olefinen (APAOs) und Harz, wobei der Gewichtsanteil des oder der Harze/s unter 20 Gew.-%, bezogen auf das Gewicht der Heißschmelzmasse, liegt.

Mischungen aus isotaktischen niedrig-molekularen, niedrig-viskosen Homo- oder Copolymerwachsen, ataktischen Poly-alfa-Olefinen (APAOs) und einem oder mehreren Harz/en mit einem Anteil an Harz von kleiner als 20 Gew.-% haben eine Viskosität bei einer Temperatur von 170°C von 500 bis 10 000 mPa·s, bevorzugt zwischen 1000 und 5000 mPa·s. Sie lassen sich leicht auf Oberflächen auftragen und zeigen eine sehr gute Kohäsion.

Gegenstand der Erfindung sind Heißschmelzmassen enthaltend
a) ein oder mehrere isotaktische/s Homo- und/oder Copolymerwachs/e aus den Monomeren Ethylen und/oder Propylen und/oder höhere lineare oder verzweigte alpha-Olefine mit 4 bis 20 C-Atomen, wobei das oder die Copolymerwachs/e, bezogen auf das Gesamtgewicht des oder der Copolymerwachse 0,1 bis 30 Gew.-% an Struktureinheiten enthalten, die hervorgegangen sind aus dem einen Monomer, und 70 bis 99,9 Gew.-% an Struktureinheiten aus dem oder den anderen Monomeren, wobei das oder die Homo- und Copolymerwachs/e ein gewichtsmittleres Molekulargewicht M_{w} von kleiner/gleich 40 000 g/mol besitzen und durch Metallocenkatalyse erhalten worden sind, einen Tropf- oder Erweichungspunkt Ring/Kugel zwischen 80 und 165°C haben, eine Schmelzviskosität, gemessen bei einer Temperatur von 170°C, zwischen 20 und 40 000 mPa·s besitzen und eine Glasübergangstemperatur T_{g} von maximal -20°C aufweisen ,
b) ein oder mehrere amorphe, ataktische Poly-alpha-Olefin/e (APAOs),
c) ein oder mehrere Harz/e, wobei der Gewichtsanteil an Harz bezogen auf die Heißschmelzmasse unter 20 Gew.-%, bevorzugt zwischen 1 und 18 Gew.-%, besonders bevorzugt zwischen 5 und 15 Gew.-%, ganz besonders bevorzugt zwischen 8 und 12 Gew.-% und außerordentlich bevorzugt zwischen 10 und 12 Gew.-%, liegt.

Ein bevorzugter Gegenstand der Erfindung sind Heißschmelzmassen enthaltend
a) ein oder mehrere isotaktische Homo- und/oder Copolymerwachse aus den Monomeren Ethylen und/oder Propylen wobei die Copolymerwachse, bezogen auf das Gesamtgewicht der Copolymerwachse, 0,1 bis 30 Gew.-% an Struktureinheiten enthalten, die hervorgegangen sind aus dem einen Monomer, und 70 bis 99,9 Gew.-% an Struktureinheiten aus dem anderen Monomer und

Weiter erfindungsgemäß bevorzugte Heißschmelzmassen enthalten
a) ein oder mehrere isotaktische Propylen-Homopolymerwachse und/oder Propylen-Copolymerwachse, wobei die Propylen-Copolypmerwachse, bezogen auf das Gesamtgewicht der Copolymerwachse, 0,1 bis 30 Gew.-% an Struktureinheiten enthalten, die hervorgegangen sind aus Ethylen, und 70 bis 99,9 Gew.-% an Struktureinheiten aus Propylen.

In einer weiteren bevorzugten Ausführungsform der Erfindung sind die in den Heißschmelzmassen enthaltenen Polyolefinwachse Copolymerwachse hervorgegangen aus Ethylen und mindestens einem verzweigten oder unverzweigten 1-Alken mit 3 bis 20 C-Atomen, wobei die Menge an Struktureinheiten aus dem einen oder den mehreren 1-Alkenen mit 3 bis 20 C-Atomen in den Copolymerwachsen im Bereich von 0,1 bis 30 Gew.-% liegt.

Weiter erfindungsgemäß bevorzugte Heißschmelzmassen enthalten
a) ein oder mehrere isotaktische Ethylen-Homopolymerwachse- und/ oder Ethylen-Copolymerwachse , wobei die Ethylen-Copolymerwachse, bezogen auf das Gesamtgewicht der Copolymerwachse, 70 bis 99,9 Gew.-% an Struktureinheiten enthalten, die hervorgegangen sind aus Ethylen, und 0,1 bis 30,0 Gew.-% an Struktureinheiten aus Propylen.

In einer weiteren bevorzugten Ausführungsform der Erfindung sind die in den Heißschmelzmassen enthaltenen Polyolefinwachse Copolymerwachse aus Propylen und einem oder mehreren weiteren Monomeren ausgewählt aus Ethylen und verzweigten oder unverzweigten 1-Alkenen mit 4 bis 20 C-Atomen, wobei die Menge an Struktureinheiten hervorgegangen aus Ethylen in den Copolymerwachsen im Bereich von 0,1 bis 30 Gew.-% und die Menge an Struktureinheiten hervorgegangen aus dem einen oder den mehreren 1-Alkenen mit 4 bis 20 C-Atomen in den Copolymerwachsen im Bereich von 0,1 bis 50 Gew.-% liegt.

Weiter bevorzugte erfindungsgemäße Heißschmelzmassen enthaltenen Homo- und/oder Copolymerwachse, die eine zahlenmittlere Molmasse Mₙ zwischen 500 und 20 000 g/mol, bevorzugt zwischen 800 und 10 000 g/mol und besonders bevorzugt zwischen 1000 und 5000 g/mol, und eine gewichtsmittlere Molmasse M_{w} zwischen 1000 und 40 000 g/mol, bevorzugt zwischen 1600 und 30 000 g/mol und besonders bevorzugt zwischen 2000 und 25 000 g/mol, aufweisen.

In einer bevorzugten Ausführungsform enthalten die erfindungsgemäßen Heißschmelzmassen
a) 0,1 bis 39 Gew.-%, bevorzugt 5 bis 35 Gew.-%, besonders bevorzugt 10 bis 30 Gew.-% und außerordentlich bevorzugt 20 bis 25 Gew.-%, eines oder mehrerer isotaktischer Homo- und/ oder Copolymerwachse/s aus den Monomeren Ethylen und/oder Propylen und/oder höhere lineare oder verzweigte alpha-Olefine mit 4 bis 20 C-Atomen, wobei das oder die Copolymerwachse, bezogen auf das Gesamtgewicht der Copolymerwachse, 0,1 bis 30 Gew.-% an Struktureinheiten enthalten, die hervorgegangen sind aus dem einen Monomer, und 70 bis 99,9 Gew.-% an Struktureinheiten aus dem oder den anderen Monomeren und wobei das oder die Homo- und Copolymerwachse ein gewichtsmittleres Molekulargewicht M_{w} von kleiner/gleich 40 000 g/mol besitzen, durch Metallocenkatalyse erhalten worden sind, einen Tropf- oder Erweichungspunkt Ring/Kugel zwischen 80 und 165°C haben, eine Schmelzviskosität, gemessen bei einer Temperatur von 170°C, zwischen 20 und 40 000 mPa·s besitzen und eine Glasübergangstemperatur T_{g} von maximal -10°C aufweisen und
b) 61 bis 95 Gew.- %, bevorzugt 62 bis 90 Gew.-%, besonders bevorzugt 65 bis 85 Gew.-% und außerordentlich bevorzugt 70 bis 80 Gew.-% eines oder mehrerer amorpher, ataktischer Poly-alpha-Olefins/e (APAOs) und
c) ein oder mehrere Harze in einem Anteil von kleiner als 20 Gew.-%, bevorzugt zwischen 1 und 18 Gew.-%, besonders bevorzugt zwischen 5 und 15 Gew.-%, ganz besonders bevorzugt zwischen 8 und 12 Gew.-% und außerordentlich bevorzugt zwischen 10 und 12 Gew.-%. In einer weiteren Ausführungsform bestehen die erfindungsgemäßen Heißschmelzmassen aus

a) einem oder mehreren isotaktischen Homo- und/oder Copolymerwachs/en aus den Monomeren Ethylen und/oder Propylen und/oder höhere lineare oder verzweigte alpha-Olefine mit 4 bis 20 C-Atomen, wobei das oder die Copolymerwachse, bezogen auf das Gesamtgewicht der Copolymerwachse, 0,1 bis 30 Gew.-% an Struktureinheiten enthalten, die hervorgegangen sind aus dem einen Monomer, und 70 bis 99,9 Gew.-% an Struktureinheiten aus dem oder den anderen Monomeren.

Die erfindungsgemäß in Heißschmelzmassen eingesetzten ataktischen Poly-alpha-Olefine (APAOs) sind überwiegend amorph und haben eine Kristallinität von kleiner als 30 %, bestimmt nach DSC (differential scanning calorimetry). Die eingesetzten APAOs können Homopolymere von Propylen oder Copolymere von Propylen mit einem oder mehreren alpha-Olefinen, beispielsweise Ethylen, 1-Buten, 1-Propen, 1-Hexen, 1-Hepten oder 1-Octen sein. Die gewichtsmittleren Molmasse M_{w} der eingesetzten APAOs liegt im Bereich von 4 000 bis 150 000 g/mol, bevorzugt zwischen 10 000 und 100 000 g/mol. Ihre Erweichungspunkte liegen zwischen 80 und 170°C, ihre Glasübergangstemperaturen T_{g} zwischen -5°C und -40°C.

Unter den APAOs bevorzugt eingesetzt werden Propylen-Homopolymere, Propylen-Ethylen-Copolymere, Propylen-1-Buten-Copolymere und Propylen-Ethylen-1-Buten-Terpolymere. APAO-Polymere sind erhältlich unter den Handelsnamen ^{®}Eastoflex der Eastman Chemical Company, unter den Handelnamen ^{®}Rextac der Huntsman Corporation oder unter dem Handelsnamen ^{®}Vestoplast der Degussa Corporation.

Als Harze stehen zur Verfügung aliphatische und cycloaliphatische Kohlenwasserstoffe mit Erweichungspunkten von 10°C bis 160°C, bestimmt nach der ASTM Methode E28-58T. Diese können durch Polymerisation von aliphatischen und/oder cycloaliphatischen Olefinen und Diolefinen hergestellt werden. Ebenso in Betracht kommen hydrierte aliphatische und cycloaliphatische Kohlenwasserstoffe aus Mineralöl, beispielsweise die von Eastman Chemical Company unter den Handelsnamen Eastoflex, RegalREZ, Kristalex, Eastotac, Piccotac oder von ExxonMobil Chemical Company unter Escoreze erhältlichen Harze.

In Betracht kommen ebenfalls aromatische Kohlenwasserstoffe aus Erdöl und deren hydrierte Derivate, ebenso aliphatisch/aromatische Kohlenwasserstoffe aus Erdöl und deren hydrierte oder säurefunktionalisierte Derivate, aromatisch modifizierte cycloaliphatische Harze und deren hydrierte Derivate, Polyterpen-Harze mit Erweichungspunkten zwischen 110°C und 140°C, die durch Polymerisation von Terpenen, beispielsweise Pinen in Gegenwart eines Friedel-Crafts Katalysators hergestellt werden, hydrierte Polyterpene, Copolymere und Terpolymere von natürlichen Terpenen, beispielsweise Styrol/Terpene, α-Methylstyrol/Terpen und Vinyltoluol/Terpen. Weiter in Betracht kommen natürliche und modifizierte Kolophoniumharze, insbesondere Harzester, Glycerinester von Baumharzen, Pentaerithrolester von Baumharzen und Tallölharzen und deren hydrierte Derivate, sowie phenol-modifizierte Pentaerithroester von Harzen und phenol-modifizierte Terpen-Harze.

Die erfindungsgemäßen Heißschmelzmassen können zusätzlich Polyolefin-Kunststoffe, Wachse, Weichmacher, polare oder unpolare Polymere, Pigmente, Füllstoffe, Stabilisatoren und/oder Antioxidantien enthalten.

Für die Herstellung der erfindungsgemäß verwendeten Polyolefinwachse werden Metallocenverbindungen der Formel I eingesetzt.

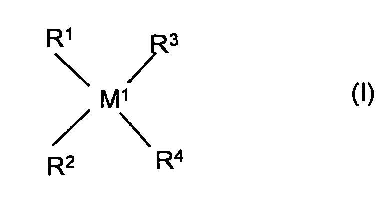

Diese Formel umfasst auch Verbindungen der Formel la, 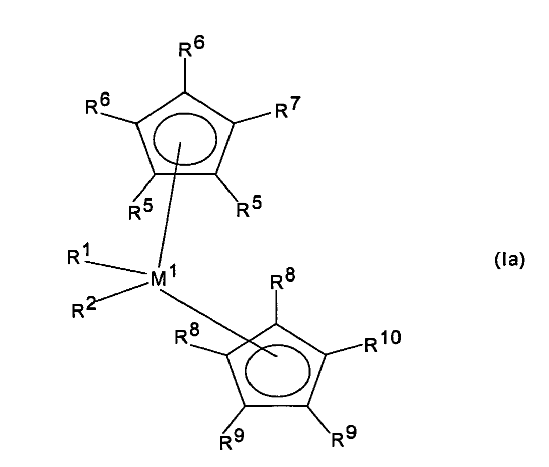 der Formel Ib 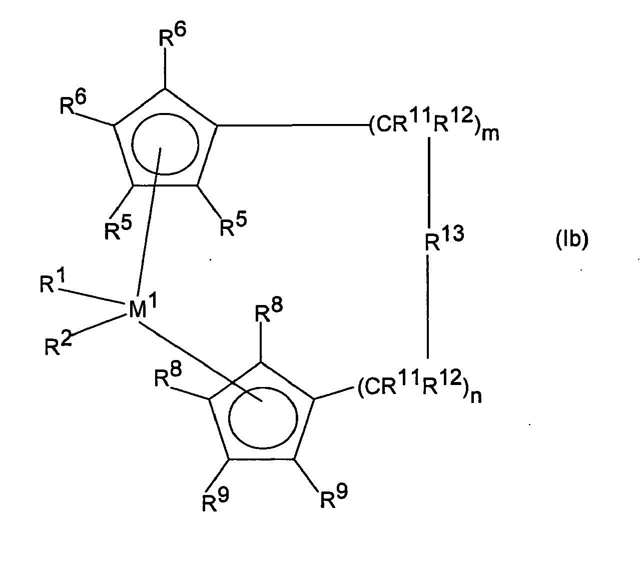 und der Formel Ic

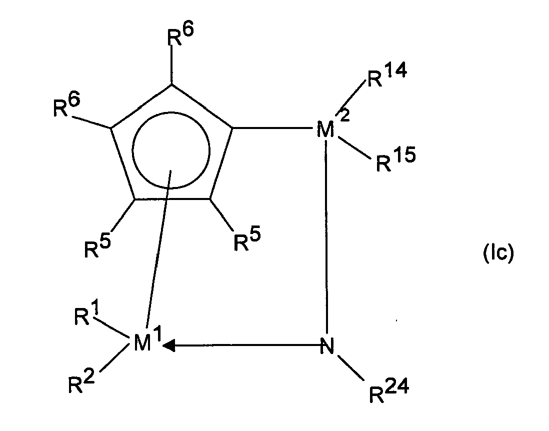

In den Formeln I, Ia und Ib ist M¹ ein Metall der Gruppe IVb, Vb oder VIb des Periodensystems, beispielsweise Titan, Zirkonium, Hafnium, Vanadium, Niob, Tantal, Chrom, Molybdän, Wolfram, vorzugsweise Titan, Zirkonium, Hafnium.

R¹ und R² sind gleich oder verschieden und bedeuten ein Wasserstoffatom, eine C₁-C₁₀-, vorzugsweise C₁-C₃-Alkylgruppe, insbesondere Methyl, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogen-, vorzugsweise Chloratom.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Tetrahydroindenyl, Benzoindenyl oder Fluorenyl, wobei die Grundkörper noch zusätzliche Substituenten tragen oder miteinander verbrückt sein können. Außerdem kann einer der Reste R³ und R⁴ ein substituiertes Stickstoffatom sein, wobei R²⁴ die Bedeutung von R¹⁷ hat und vorzugsweise Methyl, tert.-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀-, vorzugsweise C₆-C₈-Arylgruppe, eine C₁-C₁₀-, vorzugsweise C₁-C₃-Alkoxygruppe, einen -NR¹⁶₂-, -SR¹⁶-, -OSiR¹⁶₃-, -SiR¹⁶₃- oder -PR¹⁶₂-Rest, worin R¹⁶ eine C₁-C₁₀-, vorzugsweise C₁-C₃-Alkylgruppe oder C₆-C₁₀-, vorzugsweise C₆-C₈-Arylgruppe oder im Falle Si oder P enthaltender Reste auch ein Halogenatom, vorzugsweise Chloratom ist oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Cyclopentadienyl, Indenyl, Tetrahydroindenyl, Benzoindenyl oder Fluorenyl.

R¹³ ist 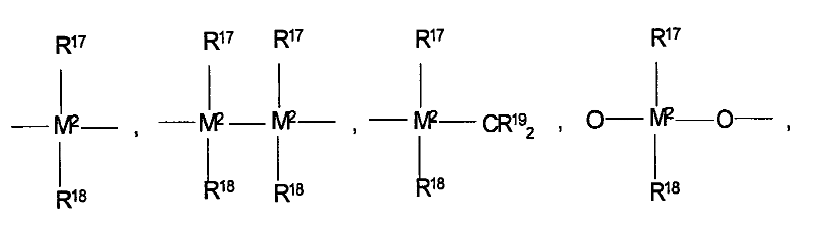 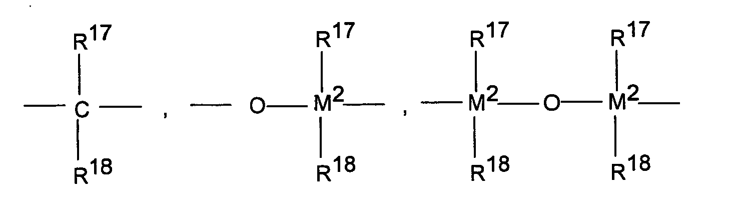 =BR¹⁷, =AIR¹⁷, -Ge-, -Sn-, -O-, -S-, =SO, =SO₂, =NR¹⁷, =CO, =PR¹⁷ oder =P(O)R¹⁷, wobei R¹⁷, R¹⁸ und R¹⁹ gleich oder verschieden sind und ein Wasserstoffatom, ein Halogenatom, vorzugsweise ein Fluor-, Chlor- oder Bromatom, eine C₁-C₃₀-, vorzugsweise C₁-C₄-Alkyl-, insbesondere Methylgruppe, eine C₁-C₁₀-Fluoralkyl-, vorzugsweise CF₃-Gruppe, eine C₆-C₁₀-Fluoraryl-, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxy-, insbesondere Methoxygruppe, eine C₂-C₁₀-, vorzugsweise C₂-C₄-Alkenylgruppe, eine C₇-C₄₀-, vorzugsweise C₇-C₁₀-Aralkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Beispiele für geeignete Metallocene sind:
Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-i.propyl-indenyl)zirkoniumdichlorid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,
Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethylcyclopentadienyl)zirkoniumdichlorid,
Dimethylsilyl-bis-1-(2,4-dimethyl-cyclopentadienyl)zirkoniumdichlorid,
Dimethylsilyl-bis-1-(2-methyl-4,5-benzoindenyl)zirkoniumdichlorid,
Dimethylsilyl-bis-1-(2-methyl-4-ethylindenyl)zirkoniumdichlorid,
Dimethylsilyl-bis-1-(2-methyl-4-i-propylindenyl)zirkoniumdichlorid,
Dimethylsilyl-bis-1-(2-methyl-4-phenylindenyl)zirkoniumdichlorid,
Dimethylsilyl-bis-1-(2-methyl-indenyl)zirkoniumdichlorid,
Dimethylsilyl-bis-1-(2-methyltetrahydroindenyl)zirkoniumdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4,5-benzoindenyl)zirkoniumdichlorid,
Ethylen-bis-1-(2-methyl-4-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indenylzirkoniumdichlorid,
Ethylen-bis-1-tetrahydroindenylzirkoniumdichlorid,
Indenyl-cyclopentadienyl-zirkoniumdichlorid
Isopropyliden(1-indenyl)(cyclopentadienyl)zirkoniumdichlorid,
Isopropyliden(9-fluorenyl)(cyclopentadienyl)zirkoniumdichlorid,
Phenylmethylsilyl-bis-1-(2-methyl-indenyl)zirkoniumdichlorid,
sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel 1 sind aluminiumorganische Verbindungen, insbesondere Alumoxane oder auch aluminiumfreie Systeme wie R²⁰ₓNH₄₋ₓBR²¹₄, R²¹ₓPH₄₋ₓBR²¹₄, R²⁰₃CBR²¹₄ oder BR²¹₃.

In diesen Formeln bedeutet x eine Zahl von 1 bis 4, die Reste R²⁰ sind gleich oder verschieden, bevorzugt gleich, und bedeuten C₁-C₁₀-Alkyl oder C₆-C₁₈-Aryl oder zwei Reste R²⁰ bilden zusammen mit dem sie verbindenden Atom einen Ring, und die Reste R²¹ sind gleich oder verschieden, bevorzugt gleich, und stehen für C₆-C₁₈-Aryl, das durch Alkyl, Haloalkyl oder Fluor substituiert sein kann. Insbesondere steht R²⁰ für Ethyl, Propyl, Butyl oder Phenyl und R²¹ für Phenyl, Pentafluorphenyl, 3,5-Bis-trifluormethylphenyl, Mesityl, Xylyl oder Tolyl.

Zusätzlich ist häufig eine dritte Komponente erforderlich, um einen Schutz von polaren Katalysator-Giften aufrecht zu erhalten. Hierzu sind aluminiumorganische Verbindung wie z.B. Triethylaluminium, Tributylaluminium und andere sowie Mischungen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Weiterer Gegenstand der Erfindung ist die Verwendung der erfindungsgemäßen Heißschmelzmassen als Schmelzkleber.

Weitere mögliche Bestandteile sind Harze, Wachse und unpolare oder polare Polymere wie z.B. Ethylen-Vinylacetat-Copolymere, Polyacrylate, Polyester, Polyether, Polycarbonate, Polyacetale, Polyurethane, Polyolefine, Kautschukpolymere, wie Nitril- oder Styrol/Butadiene Kautschuke.

Polyisobutylen, Styrol-Butadien-Styrol-Blockpolymere oder Styrol-Isopren-Styroi-Blockpolymere, für besonders hoch beanspruchte Verklebungen auch Polyamide oder Polyester. Als Harzkomponenten können z.B. Kolophoniumharze und deren Derivate oder Kohlenwasserstoffharze enthalten sein, als Wachse Kohlenwasserstoffwachse wie Fischer-Tropsch-Paraffine, nicht mit Metallocenkatalysatoren hergestellte Polyolefinwachse, wobei diese unpolar oder polar modifiziert, z.B. oxidiert oder mit polaren Monomeren wie Maleinsäureanhydrid gepfropft, sein können. Die Schmelzklebermassen können zusätzlich Füllstoffe oder Hilfsstoffe wie Weichmacher, Pigmente und Stabilisatoren wie Antioxidantien oder Lichtschutzmittel enthalten.

Die nachfolgenden Beispiele sollen die Erfindung für den Fachmann näher erläutern, ohne jedoch auf die konkret dargestellten Erscheinungsformen beschränkt zu sein.

Die Schmelzviskositäten wurden im Rahmen der Ausführungsbeispiele nach DIN 53019 mit einem Rotationsviskosimeter, die Tropfpunkte nach DIN 51801/2, die Erweichungspunkte Ring/Kugel nach DIN EN 1427 und die Glasübergangstemperaturen mit Hilfe der Differentialthermoanalyse nach DIN 51700 bestimmt. Das Molmassengewichtsmittel M_{w}, das Molmassenzahlenmittel Mₙ und der resultierende Quotient M_{w}/Mₙ wurden durch Gelpermeationschromatographie bei 135°C in 1,2-Dichlorbenzol ermittelt.

### Ausführungsbeispiele

Die erfindungsgemäß eingesetzten, in Tabelle 1 aufgeführten Metallocen-Polyolefinwachse 1, 2 und 3 wurden durch Copolymerisation von Propylen mit Ethylen in Gegenwart des Metallocens Dimethylsilylbisindenylzirkoniumdichlorid als Katalysator nach dem in EP A 0 384 264 angegebenen Verfahren (allg. Vorschrift Bsp. 1-16) hergestellt. Die unterschiedlichen Erweichungspunkte und Viskositäten wurden durch Variation des Ethyleneinsatzes und der Polymerisationstemperatur eingestellt.

**Tabelle 1: Zusammensetzung der Polyolefinwachse**

| Polyolefinwachs | Ethylen [Gew.-%] | Propylen [Gew.-%] |
|---|---|---|
| 1 | 9 | 91 |
| 2 | 10 | 90 |
| 3 | 6 | 94 |

**Tabelle 2: Erweichungs-/Tropfpunkt, Viskosität, gewichtsmittlere Molekulargewichte und Dichte der Polyolefinwachse**

| | Produkttyp | Erweichungs-/ Tropfpunkt [°C] | Viskosität bei 170°C [mPa·s] | gewichtsmittleres Molekulargewicht M_{w} [g/mol] | Dichte [g/cm³] |
|---|---|---|---|---|---|
| 1 | Propylen-Ethylen Copolymerwachs (Metallocene) | 92** | 1600 | 13 300 | 0.88 |
| 3 | Propylen-Ethylen Copolymerwachs (Metallocene) | 90** | 4500 | 18 000 | 0.88 |
| 2 | Propylen-Ethylen Copolymerwachs (Metallocene) | 110** | 3000 | 16850 | 0.88 |

| | | | | | |
|---|---|---|---|---|---|
| *) Tropfpunkt **) Erweichungspunkt | | | | | |

Anwendungstechnische Prüfergebnisse

**Tabelle 3: Kohäsionen der Schmelzklebemassen im Vergleich zu den Einzelkomponenten**

| Beispiel | Wachs 1 [Gew.-%] | Wachs 3 [Gew.-%] | Wachs 2 [Gew.-%] | Vestoplast 703 [Gew.-%] | Eastotac 130 [Gew.-%] | Kohäsion [N/mm²] |
|---|---|---|---|---|---|---|
| 1 | 60 | | | 30 | 10 | 3,4 |
| 2 | | 60 | | 30 | 10 | 22 |
| 3 | | | 60 | 30 | 10 | 3.55 |
| 4 | 100 | | | | | 1,1 |
| 5 | | 100 | | | | 1.0 |

Die in Tabelle 3 aufgeführten Schmelzklebermassen wurden hergestellt aus den in Tabelle 1 angegebenen Copolymerwachsen 1, 2 und 3, den unter dem Handelsnamen Vestoplast 703 (Degussa) erhältlichen ataktischen alpha-Olefinen (APAOs) und dem unter dem Handelsnamen und Eastotac 130 (Eastman) mit den Mischungsverhältnissen 60 Gew.-% Copolymerwachs, 30 Gew.-% APAO und 10 Gew.-% Harz. Die einzelnen Komponenten wurden gemeinsam aufgeschmolzen und über eine Zeitdauer von 1 h bei 180°C gerührt.

Die Kohäsionen wurden gemäß DIN 53455 bestimmt, indem Formkörper vergossen und deren mechanische Stabilität im Zugversuch geprüft wurde.

## Patentansprüche

1. Heißschmelzmassen, **dadurch gekennzeichnet, dass** sie enthalten
a) ein oder mehrere isotaktische Homo- und/oder Copolymerwachse aus den Monomeren Ethylen und/oder Propylen und/oder höhere lineare oder verzweigte alpha-Olefine mit 4 bis 20 C-Atomen, wobei das oder die Copolymerwachs/e, bezogen auf das Gesamtgewicht des oder der Copolymerwachse, 0,1 bis 30 Gew.-% an Struktureinheiten enthalten, die hervorgegangen sind aus dem einen Monomer, und 70 bis 99,9 Gew.-% an Struktureinheiten aus dem oder den anderen Monomeren und wobei das oder die Homo- und Copolymerwachs/e ein gewichtsmittleres Molekulargewicht M_{w} von kleiner/gleich 40 000 g/mol besitzen, durch Metallocenkatalyse erhalten worden sind, einen Tropf- oder Erweichungspunkt Ring/Kugel zwischen 80 und 165°C haben, eine Schmelzviskosität, gemessen bei einer Temperatur von 170°C, zwischen 20 und 40 000 mPa·s besitzen und eine Glasübergangstemperatur T_{g} von maximal -20°C aufweisen,
b) ein oder mehrere amorphe, ataktischen Poly-alpha-Olefin/e (APAOs),
c) ein oder mehrere Harz/e, wobei der Gewichtsanteil an Harz bezogen auf die Heißschmelzmasse unter 20 Gew.-%, bevorzugt zwischen 1 und 18 Gew.-%, besonders bevorzugt zwischen 5 und 15 Gew.-%, ganz besonders bevorzugt zwischen 8 und 12 Gew.-% und außerordentlich bevorzugt zwischen 10 und 12 Gew.-%, liegt.

2. Heißschmelzmassen gemäß Anspruch 1, **dadurch gekennzeichnet, dass** sie
a) ein oder mehrere isotaktische Homo- und/oder Copolymerwachse aus den Monomeren Ethylen und/oder Propylen enthalten, wobei die Copolymerwachse, bezogen auf das Gesamtgewicht der Copolymerwachse 0,1 bis 30 Gew.-% an Struktureinheiten enthalten, die hervorgegangen sind aus dem einen Monomer, und 70 bis 99,9 Gew.-% an Struktureinheiten aus dem anderen Monomer.

3. Heißschmelzmassen gemäß Anspruch 1 oder 2, **dadurch gekennzeichnet, dass** sie
a) ein oder mehrere isotaktische Propylen-Homopolymerwachse- und/oder Propylen-Copolymerwachse enthalten, wobei die Propylen-Copolymerwachse, bezogen auf das Gesamtgewicht der Copolymerwachse, 0,1 bis 30 Gew.-% an Struktureinheiten enthalten, die hervorgegangen sind aus Ethylen, und 70 bis 99,9 Gew.-% an Struktureinheiten aus Propylen.

4. Heißschmelzmassen gemäß Anspruch 1 oder 2, **dadurch gekennzeichnet, dass** sie
a) Homo- oder Copolymerwachse enthalten, hervorgegangen aus Ethylen und mindestens einem verzweigten oder unverzweigten 1-Alken mit 3 bis 20 C-Atomen, wobei die Menge an Struktureinheiten aus dem verzweigten oder unverzweigten 1-Alken mit 3 bis 20 C-Atomen in den Copolymerwachsen im Bereich von 0,1 bis 30 Gew.-% liegt.

5. Heißschmelzmassen gemäß Anspruch 1 oder 2, **dadurch gekennzeichnet, dass** sie die in den Heißschmelzmassen enthaltenen Homo- und/oder Copolymerwachse, eine zahlenmittlere Molmasse Mₙ zwischen 500 und 20 000 g/mol, bevorzugt zwischen 800 und 10 000 g/mol, besonders bevorzugt zwischen 1000 und 5000 g/mol, und eine gewichtsmittlere Molmasse M_{w} zwischen 1000 und 40 000 g/mol, bevorzugt zwischen 1600 und 30 000 g/mol und besonderes bevorzugt zwischen 2000 und 25 000 g/mol, aufweisen.

6. Heißschmelzmassen gemäß einem oder mehreren der Ansprüche 1 bis 5, **dadurch gekennzeichnet, dass** sie
a) 0,1 bis 39 Gew.-%, eines oder mehrerer isotaktischen Homo- und/oder Copolymerwachse/s aus den Monomeren Ethylen und/oder Propylen und/oder höhere lineare oder verzweigte alpha-Olefine mit 4 bis 20 C-Atomen enthalten und
b) 61 bis 95 Gew.- %, eines oder mehrerer amorpher, ataktischer Poly-alpha-Olefins/e (APAOs) und
c) ein oder mehrere Harz/e, wobei der Gewichtsanteil an Harz bezogen auf die Heißschmelzmasse unter 20 Gew.-% liegt.

7. Verwendung der Heißschmelzmassen nach einem der Ansprüche 1 bis 6 als Schmelzkleber.
